# EUROPEAN PATENT SPECIFICATION

(11) **EP 1 460 281 B1**
(45) Date of publication and mention of the grant of the patent: **27.09.2006**
(21) Application number: 03005351.6
(22) Date of filing: 12.03.2003
(51) Int. Cl.: F16B 37/04

(54) **Fastener and shelf or cabinet including at least one fastener**
Befestigungselement und ein Regal oder Schrank mit mindestens einem Befestigungselement
Elément de fixation et un étagère ou armoire comprenant au moins un element de fixation

(43) Date of publication of application: 22.09.2004
(73) Proprietor: 3M Innovative Properties Company, St. Paul, Minnesota 55133-3427 (US); Springfix Befestigungstechnik GmbH, 73084 Salach (DE)
(72) Inventor: Hoeschler, Peter, 42553 Velbert (DE); Gorontzi, Armin, 58313 Herdecke (DE); Just, Dieter, 69168 Wiesloch (DE)
(74) Representative: HOFFMANN EITLE

(56) References cited:
- FR-A- 2 583 469
- US-A- 2 724 419
- US-A- 2 875 804

## Description

### Field of the Invention

The invention relates to a fastener and a shelf or a cabinet including at least one fastener.

Fasteners are used in numerous technical fields in order to fix any type of objects to each other. The structure and specific function of the fastener strongly depends on the type of objects as well as the forces which can be expected to act on the objects and/or the fastener. As an example, in the field of cabinets or shelves, e.g. in the field of switch cabinets, particularly more so for cabinets in the field of telecommunications, fasteners are used to locate panels or plates on frame members. In this context, it is desirable to enable the fastener to be fastened from a single side without the need to manipulate the fastener or a part thereof from another side. A front side, e.g. of a cabinet or shelf, is preferred for handling the fastener. Furthermore, it is desirable to form the fastener in a way in which the items to be fastened are not only fixed to each other but rather an electrical connection should be established by means of the fastener in order to provide an earthed electrical connection.

### Background

DE 201 04 604 U1 discloses a fastener having at least one projection, which is adapted to work the edge of an opening, into which the fastener can be inserted. A screw can be screwed into the fastener so as to deflect at least one spring tab, which, in the deflected state, applies a clamping force to the items to be fastened.

### Summary of the Invention

The invention provides a fastener which can be handled in an easy manner and reliably provides a clamping force to the objects to be fixed to each other as well as an electrical connection.

The novel fastener is insertable into an opening having an edge. The fastener has a body and a thread member, which can slide within the body. The thread member is slideable in a sliding direction. The body has a front with a stop for abutting at the edge of the opening. A screw with a screw head is insertable through the front of the fastener. The thread member is adapted to engage with the screw so as to move the thread member in a sliding direction towards the front, when the screw head abuts the front of the fastener. The body has legs extending from the front of the fastener. At least one leg has a thickened forward portion. In other words, the leg is thickened in a portion in the vicinity of the front of the fastener. Finally, the body of the fastener is made of metal.

Firstly, it is worth mentioning that the fastener, in the body of which the thread member is held, is insertable into an opening from a side thereof, which will be referred to as the front side. In particular, the fastener is insertable from the front side and is ready for being activated and performing its function without the need for handling or manipulating the fastener at the rear side thereof. Thus, in the case where two objects are to be fixed to each other, these objects having suitable openings are located correctly with regard to each other, and the fastener is inserted through the openings thereof. As described in more detail below, a stop at the front of the fastener prevents the fastener from being pushed through the openings.
Furthermore, as detailed below, at least a portion of the fastener extends from the openings at the rear side thereof. This portion is then activated in a manner to apply a clamping force acting on the members to be fixed to each other. Thus, the fastener, including a body and a thread member held therein, is insertable into an opening from the front side.

The body of the fastener including various portions, as detailed below, can also be considered as a cage. In particular, the body does not necessarily have to be closed. The body can be made from a single piece of sheet metal from which various tabs and legs, including specific features thereof as detailed below, can be stamped and suitably bent. The thread member is held in the body so as to be slideable in a sliding direction. As mentioned, the body has a front with a stop for abutting at the edge of the opening, into which the fastener is insertable. As an example, the body can have one or more tabs or projections which extend from the body at the front thereof so as to prevent the fastener from moving all the way through the opening. A screw with a screw head is insertable through the front. When the screw is inserted through the front, it will engage with the thread member. In particular, the thread of the screw corresponds to the internal thread of the thread member. It should be mentioned that the screw can be a standard screw, e.g. an M6 size thread. When the screw is threaded into the thread member, the screw head moves towards the front of the fastener and eventually abuts at the front. For this purpose, a hole or opening can be formed in the front of the fastener that is large enough to allow the shaft or bolt of the screw to be inserted but will provide a stop for the screw head. As an alternative, a larger hole or opening area can be provided at the front of the fastener, and the screw can be combined with a washer so as to provide the described abutment.

As soon as the screw abuts at the front of the fastener, and rotation of the screw is continued, the threading engagement between the screw and the thread member will pull the thread member towards the front of the fastener. In order to provide a clamping force as a result of this movement, the body of the fastener has a thickened forward portion. In the initial state, the body together with the one or more legs including the thickened portion is designed to allow the fastener to be inserted into an opening with a defined size. However, the described sliding movement of the thread member in the sliding direction will cause the thickened portion of the body to cooperate with portions of the thread member. The thread member essentially moves along the leg and, in this connection, reaches the thickened portion. The presence of the material of the thread member in addition to the thickened material of the leg will prevent the fastener from moving out of the opening. The presence of the mentioned material thicknesses will apply a clamping force to those objects, which are to be fixed by means of the fastener. In particular, by corporation of the thread member and the thickened portion of the leg of the body, at least portions of the fastener will become larger in size than the opening, into which the fastener was inserted. These portions will abut at the inner edge of the opening, in particular on an inner object, so as to clamp the inner object to the outer object.

Furthermore, the body is made of metal and has a portion adapted to engage with the edge of the opening, into which the fastener was inserted. This engagement will be suitable for working the edge of the opening, which can be coated by oxide films, paint or powder coatings, etc. in order to expose the metal of the object to be fixed. As the body, which has the described engaging portion, is also made of metal, an electrical connection can be established between the fastener and the object to be fixed. Thus, by a very simple procedure of fixing the fastener, objects cannot only be fixed to each other, but also an electrical connection can be established. Particularly in the field of shelves or cabinets containing electrical devices such as switches, a earth connection should be established for all parts of the shelf or cabinet. By means of the novel fastener, these connections can be provided.

Furthermore, the novel fastener has superior handling properties. In particular, it only has to be inserted from one side, e.g. the front side. As soon as the screw is inserted, which can also be conducted from the front side, the fastener can be activated and a clamping force can be applied. This easy assembly also reduces the time which is required to fix two items to each other. It should also be mentioned that the screw can be provided premounted in the fastener. For example, the screw can be screwed a short distance into the thread member, particularly until the head of the screw abuts the front of the fastener. In this state, the fastener can be inserted into the opening. As soon as the screw is rotated from this state, the thread member is moved towards the front and the clamping action is initiated.

It should be mentioned that the fastener is preferably adapted for the so-called 19 inch technology. Thus, the fastener can be adapted for square openings with a side length of 9.5 mm. As regards the general properties of the fastener, the method of applying the fastener and fixing objects to each other as well as the specific situations, in which the fasteners can be used and the type of items which can be fixed to each other, reference is made to DE 201 04 604 U1, the disclosure of which is incooperated herein by means of reference. It should, furthermore, be mentioned that two sheet metal items can be prefixed by means of the fastener alone, i.e. without a screw being inserted. As outlined above, the fastener is adapted to be inserted into holes formed in the sheet metal items. As a consequence as soon as the fastener is inserted, the sheet metal items cannot be displaced relative to each other anymore. In particular, a number of fasteners can be inserted into a number of openings. The final fixing procedure can be conducted for all fasteners, after all of these have been inserted, by additionally inserting a screw in each of the fasteners, bringing the screw into engagement with the thread member, turning the screw and thus applying the clamping force. Moreover, the fastener can be inserted in a sheet metal item alone, in order to fix another item to the first item. In this situation, the fastener is inserted, and the second item is applied. In particular, the openings of the second item do not have to include openings, which are suitable for the insertion of the fastener. The openings merely have to be adapted to allow the insertion of a screw. The opening of the second item is aligned with the opening of the fastener. Afterwards, the screw is inserted through the mentioned openings. After bringing the screw into engagement with the thread member and applying the clamping force, the second item is fixed by means of the screw, and the required counterforce is applied by the fastener clamped with the first item. In this manner, the novel fastener has a remarkable flexibility with regard to the type and configuration of the second item, which is to be fixed to the first item.

The thickened forward portion of the leg can be formed by doubling the material of the leg in a forward portion. Thus, in the initial state, when the thread member is adjacent a portion of the leg, which has a single material thickness, the fastener is insertable into the opening. However, as the thread member moves towards the front of the fastener, it reaches a portion of the leg, which has a doubled material thickness. The presence of the thread member in addition to twice the material of the leg will result in a size, which is larger than the opening, into which the fastener was inserted. In this manner, the fastener is prevented from leaving the opening, and the clamping force can be provided. The described doubled material thickness of the leg can be provided by applying a separate peace of sheet metal.

However, the doubled material thickness can also be formed by means of at least one tab, which is formed integral with the leg. The doubled material thickness is obtained by means of folding the tab on the leg.

The leg having the thickened forward portion can further include at least one holding portion for holding the thread member. In particular, the leg can be provided with one or more tabs which are bent in an inward direction with regard to the body of the fastener. In this manner, the thread member can be slidably held in the body.

The thickened portion of the body can also be formed by embossing one or more legs of the fastener. This embossing or stamping operation can produce one or more portions of the leg, which project in an inward direction. As a result, the thickness of the leg including the embossed portion is increased as compared to the initial thickness of the leg which is defined by the material thickness of the sheet metal, from which the leg is formed. When the thread member reaches the embossed portion, as it moves towards the front, it will reach a gap between the embossed portions, which is smaller than the size of the thread member. As the material of the legs will be suitably rigid, continued movement of the thread member "onto'' the embossed portions, will deflect the legs in an outward direction. This will prevent the fastener from being able to move out of the opening and will effect the desired clamping force.

The handling properties of the novel fastener are further improved when the screw is premounted with the thread member.

Thus, the fastener consisting of the body, in which the thread member is slideably held, and the screw, which is already at least somewhat engaged with the thread member, can be inserted into the opening. Fixing can then be performed by rotating the screw so as to move the thread member towards the front of the fastener.

The body of the fastener can be made of spring steel. This facilitates disassembly of the novel fastener. In particular, when the screw is loosened and the thread member is returned to its initial position, the body of the fastener, in particular any deflected portions thereof, return to their initial state. As the fastener was inserted into the opening in this state, it can then also be easily removed therefrom in the same state.

The invention also provides a shelf or cabinet including at least one fastener as described above. In particular, the shelf or cabinet can be a distribution, cable or switch shelf or cabinet, particularly in the field of telecommunications. As indicated above, the shelf or cabinet can be adapted for the field of 19 inch technology.

### Brief Description of the Drawings

The invention is described hereinafter by means of nonlimiting examples and with reference to the drawings, in which
- Fig. 1: shows a first embodiment of the fastener in a perspective view from a front thereof;
- Fig. 2: shows the fastener of Fig. 1 in a perspective view from the rear thereof; and
- Fig. 3: shows a second embodiment of the fastener in a perspective view.

### Description of Preferred Embodiments

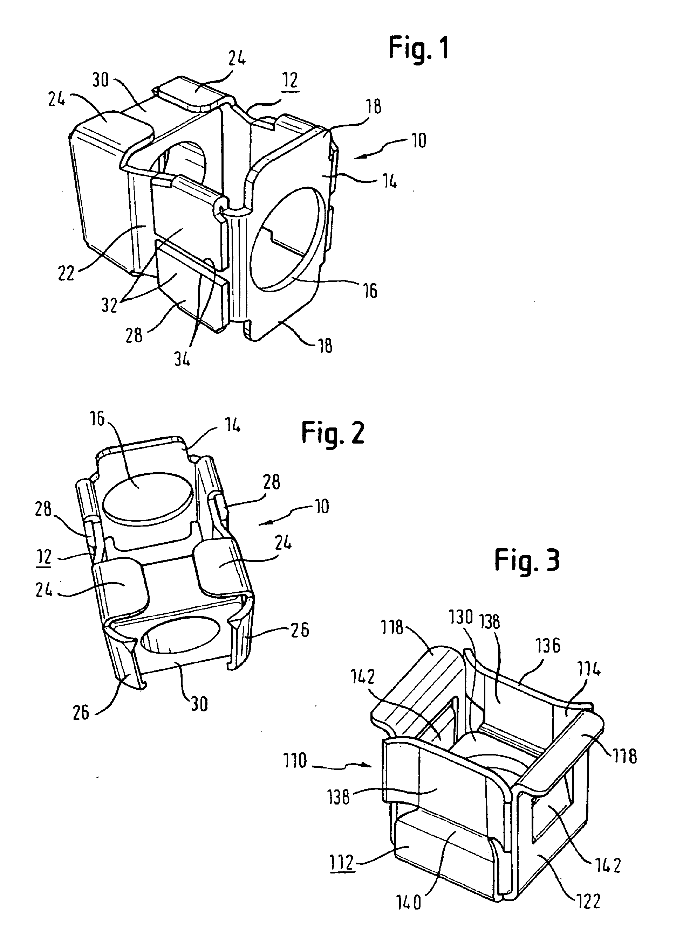

Fig. 1 shows a first embodiment of the fastener 10 in a perspective view. The fastener 10 has a body 12 and a thread member, which is not visible in the drawing. The body has a front 14, in which an opening 16 is formed, through which a bolt of a screw (not shown) can be inserted. In the case shown, the opening 16 is circular. The opening 16 can, but does not have to be, formed as a thread. The opening 16 can be formed somewhat larger than the bolt of a screw, which is to be inserted therethrough. Thus, the screw can be inserted until it engages with the internal thread of the thread member, which is located in the rear area of the fastener 10 and which is not visible in the drawing. In the case shown, the body 12 of the fastener 10 comprises a stop in the form of two tabs 18, which extend laterally. In particular, the tabs 18 extend from the remainder of the fastener 10, which is adapted to be inserted into a square opening of an item to be fixed (not shown). Thus, the fastener 10 can be inserted into the opening until the surfaces of the tabs 18, which are the lower surfaces as shown in Fig. 1, abut the edge of the opening.

As soon as the fastener has been inserted, a screw (not shown) can be inserted into the opening 16 and can engage with the thread member 30. In the case shown, legs 22 of the fastener 10 are adapted to, firstly, hold the thread member 30. Secondly, as will be described in more detail below, the legs 22 are formed as clamping legs, which cooperate with the thread member 30, when the latter is moved towards the front 14, in order to apply a clamping force. In the initial state, as shown in Fig. 1, the body 12 of the fastener can be considered a cage. In the rear part of the body, the thread member 30 is held by various tabs 24. In the case shown, each of the legs 22 has lateral tabs 24, which are bent towards each other approximately 90° with regard to the surface of the leg 22. These tabs 24, which are provided in a similar manner at that side, which is not visible in Fig. 1, hold the thread member 30 in a sideways direction. Furthermore, rear tabs 26 (see Fig. 2) are also bent towards each other in an inward direction so as to hold the thread member 30 in the sliding direction, which substantially coincides with the axis of a screw (not shown) which is insertable through opening 16 so as to engage the thread member 30.

As can be seen in the forward portion of Fig. 1, the legs 22 have a thickened portion 28. In the case shown, the thickened portion 28 is formed by doubling the material of the leg 22. This is performed by integrally providing the legs 22 with tabs 32, which are folded onto the leg 22. In the case shown, each leg has two tabs 32, each of which have a width which substantially corresponds to half of the width of the leg 22. Thus, the free ends 34 of the tabs meet approximately at the middle of the leg 22. It should be mentioned that the same effect can be achieved by a single tab 32 for each leg 22, which can be longer than each of the tabs 32 shown in Fig. 1. In particular, a single tab 32 for each leg 22 can be as long as the width of the leg 22. In this manner, the material of the leg 22 is doubled along the full width thereof.

As can be verified from Fig. 1, the thread member 30 will, when it moves towards the front 14 due to the action of a screw, the head of which abuts the edge of the opening 16, reach the thickened portion 28. In this area, the size of the thread member 30 in addition to four times the material thickness of the sheet metal (twice the material thickness of the legs 22 and twice the material thickness of the tabs 32) is larger than the size of the opening, through which the fastener 10 was inserted. In particular, as can be taken from the rear part of Fig. 1, the thread member 30 in addition to twice the material thickness of the leg 22 is insertable through the opening. As the leg 22 tapers towards the front thereof, also the thickened portion of the legs 22 is sized to fit through the opening, into which the fastener can be inserted. However, when the thread member 30 reaches the thickened portion, the body 12 will obtain a size, which is larger than the opening, through which the fastener was inserted. This prevents the fastener 10 from moving out of the opening and applies the desired clamping force.

In this connection, the sheet metal items, which are to be clamped by means of the fastener 10, are located, as seen in Fig. 1, behind the stop-tabs 18 thereof. As a result, the rear edge of the opening of the rearmost item will be located adjacent the tabs 32. The above-described clamping action will be sufficient to apply a pressure via the tabs 32 to the opening edge, which will be sufficient to remove oxide films, paint or coatings, which might be present.' As the body 12 of the fastener is made of metal, electrical connection with the sheet metal items, which are clamped by means of the fastener 10, can be established.

In Fig. 2, the cage like appearance of the fastener 10, in particular of the body 12 thereof is visible again. In particular, it can be seen, how the thread member 30 is held by the rear tabs 26 and lateral tabs 24. Furthermore, the size in the initial state, which is adapted to fit through an opening in a sheet metal item, is visible. However, when the thread member 30 moves towards the front 14, i.e. upwards in Fig. 2, it reaches the thickened portion 28 so that the desired clamping force can be applied.

Fig. 3 shows an alternative embodiment of the fastener 110 in a perspective view from a front thereof. It is worth mentioning that the front 114 of this embodiment is substantially open. The body 112 of this embodiment can again be considered a cage, however with an open front an a closed rear, which is not visible in Fig. 3. A stop, which prevents the fastener 110 from moving all the way through an opening, is again formed by two lateral tabs 118. A screw (not shown) can be inserted through the open front 114 and can abut the tabs 118 and/or the free edges 136 of holding legs 138. For the purpose of providing a stop for a screw head, the screw head can be chosen large enough. As an alternative, the screw can be combined with a washer, the screw head abutting the washer and the washer abutting the tabs 118 and/or the edges 136.

As can be seen for the forward holding leg 138, the holding legs 138 taper at portion 140 in order to hold the thread member 130 between these tapered portions 140 and the bottom of the fastener 110. These inwardly tapered portions 140 can, but do not have to be used for applying an additional clamping force, when the thread member 130 is moved towards the front 114.

The clamping force is additionally applied by means of inwardly embossed portions 142 formed in clamping legs 122. As can be seen in the figure, the inwardly embossed portions 142 extend inwardly to towards each other so as to leave a gap, which is smaller than the size of the thread member. As a result, when the thread member 130 moves towards the front 114, it will cooperate with the inwardly embossed portions 142 and, as a result, deflect the clamping legs 122 in an outwards direction. In particular, the rigidity of the metal material used for the body 112 of the fastener 110 will prevent from allowing the embossed portions 142 to return to their original state, which is at level with the surface of the clamping leg 122. Rather, the entire clamping leg 122 will be deflected in order to result in a size of the body 112 of the fastener, which is larger than the opening, through which it was inserted. Thus, the fastener 110 is retained in the opening, and a clamping force can be applied to those items, through the openings of which the fastener was inserted.

## Claims

1. A fastener (10, 110), which is insertable into an opening having an edge from a front side, wherein at least a portion of the fastener extends from the opening at the rear side thereof; the fastener includes a body (12, 112) and a thread member (30, 130), the thread member (30, 130) being held in the body (12, 112) so as to be slidable in a sliding direction, the body (12, 112) having a front (14, 114) with a stop (18, 118) for abutting at the edge of the opening and preventing the fastener (10, 110) from being pushed through the opening upon insertion of the fastener (10, 110) from the front side, a screw with a screw head being insertable through the front (14, 114) of the fastener, the thread member (30, 130) being adapted to engage with the screw so as to move the thread member in the sliding direction towards the front (14, 114) when the screw head abuts the front (14, 114), the body (12, 112) having legs (22, 122, 138) extending from the front (14, 114), at least one leg (22, 122) having a thickened forward portion (28, 142) applying a clamping force, when the thread member (30, 130) is moved in the sliding direction towards the front (14, 114), and the body (12, 112) being made of metal and having a portion (32, 142) adapted to engage with the edge of the opening.

2. The fastener in accordance with claim 1, wherein the material of at least one leg (22) is doubled in a forward portion thereof.

3. The fastener in accordance with claim 2, wherein at least one tab (32) integrally formed with the leg (22) is folded onto the leg (22).

4. The fastener in accordance with any of the preceding claims, wherein at least one leg (22, 138) further includes at least one holding portion (24, 26, 140) for holding the thread member (30, 130) in the body (12, 112).

5. The fastener in accordance with any of the preceding claims, wherein at least one leg (122) has a thickened portion formed by embossing (142).

6. The fastener in accordance with any of the preceding claims, wherein the screw is premounted with the thread member (30, 130).

7. The fastener in accordance with any of the preceding claims, wherein the body (12, 112, 212) is made of spring steel.

8. Shelf or cabinet, in particular distribution, cable or switch shelf or cabinet, including at least one fastener in accordance with at least one of the preceding claims.

## Patentansprüche

1. Befestigungselement (10, 110), das in eine Öffnung mit einem Rand von einer Vorderseite eingeführt werden kann, wobei sich mindestens ein Teil des Befestigungselements von der Öffnung an deren Hinterseite erstreckt und das Befestigungselement einen Körper (12, 112) und ein Gewindeglied (30, 130) aufweist, wobei das Gewindeglied (30, 130) in dem Körper (12, 112) gehalten wird, so dass es in einer Gleitrichtung verschiebbar ist, wobei der Körper (12, 112) eine Vorderseite (14, 114) mit einem Anschlag (18, 118) zum Anstoßen an den Rand der Öffnung und zum Verhindern, dass das Befestigungselement (10, 110) bei seinem Einführen von der Vorderseite durch die Öffnung geschoben wird, aufweist, wobei eine Schraube mit einem Schraubenkopf durch die Vorderseite (14, 114) des Befestigungselements eingeführt werden kann, wobei das Gewindeglied (30, 130) dazu ausgeführt ist, mit der Schraube in Eingriff zu gelangen, um das Gewindeglied in die Gleitrichtung zur Vorderseite (14, 114) zu bewegen, wenn der Schraubenkopf an die Vorderseite (14, 114) anstößt, wobei der Körper (12, 112) sich von der Vorderseite (14, 114) aus erstreckende Schenkel (22, 122, 138) aufweist, wobei mindestens ein Schenkel (22, 122) mit einem verdickten vorderen Teil (28, 142) eine Klemmkraft ausübt, wenn das Gewindeglied (30, 130) in die Gleitrichtung zur Vorderseite (14, 114) bewegt wird, und wobei der Körper (12, 112) aus Metall hergestellt ist und einen Teil (32, 142) aufweist, der zum Eingriff mit dem Rand der Öffnung ausgeführt ist.

2. Befestigungselement nach Anspruch 1, wobei das Material mindestens eines Schenkels (22) in einem vorderen Teil davon verdoppelt ist.

3. Befestigungselement nach Anspruch 2, wobei mindestens eine integral mit dem Schenkel (22) ausgebildete Lasche (32) auf den Schenkel (22) gefaltet ist.

4. Befestigungselement nach einem der vorhergehenden Ansprüche, wobei mindestens ein Schenkel (22, 138) ferner mindestens einen Halteteil (24, 26, 140) zum Halten des Gewindeglieds (30, 130) im Körper (12, 112) aufweist.

5. Befestigungselement nach einem der vorhergehenden Ansprüche, wobei mindestens ein Schenkel (122) einen durch Prägen (142) hergestellten verdickten Teil aufweist.

6. Befestigungselement nach einem der vorhergehenden Ansprüche, wobei die Schraube mit dem Gewindeglied (30, 130) vormontiert ist.

7. Befestigungselement nach einem der vorhergehenden Ansprüche, wobei der Körper (12, 112, 212) aus Federstahl besteht.

8. Regal oder Schrank, insbesondere Verteiler-, Kabel- oder Schaltregal oder -schrank mit mindestens einem Befestigungselement nach mindestens einem der vorhergehenden Ansprüche.

## Revendications

1. Pièce de fixation (10, 110), que l'on peut introduire dans une ouverture ayant un bord à partir de sa face avant, dans laquelle au moins une partie de la pièce de fixation s'étend à partir de l'ouverture sur la face arrière de celle-ci ; la pièce de fixation comprend un corps (12, 112) et un écrou rapporté (30, 130), l'écrou rapporté (30, 130) étant tenu dans le corps (12, 112) de façon à pouvoir à coulisser dans un sens de coulissement, le corps (12, 112) ayant un avant (14, 114) avec une butée (18, 118) pour venir en butée sur le bord de l'ouverture et empêcher la pièce de fixation (10, 110) d'être poussée à travers l'ouverture lors de l'introduction de la pièce de fixation (10, 110) depuis la face avant, une vis avec une tête de vis pouvant être introduite par l'avant (14, 114) de la pièce de fixation, l'écrou rapporté (30, 130) étant adapté pour se visser sur la vis afin de déplacer l'écrou rapporté dans le sens de coulissement vers l'avant (14, 114) quand la tête de vis est en butée sur l'avant (14, 114), le corps (12, 112) ayant des pattes (22, 122, 138) s'étendant depuis l'avant (14, 114), au moins une patte (22, 122) ayant une partie vers l'avant épaissie (28, 142) qui exerce une force de serrage quand on déplace l'écrou rapporté (30, 130) dans le sens de coulissement vers l'avant (14, 114), et le corps (12, 112) étant en métal et ayant une partie (32, 142) apte à s'enclencher avec le bord de l'ouverture.

2. Pièce de fixation selon la revendication 1, dans laquelle la matière d'au moins une patte (22) est doublée dans une partie vers l'avant de celle-ci.

3. Pièce de fixation selon la revendication 2, dans laquelle au moins une languette (32) façonnée d'une seule pièce avec la patte (22) est repliée sur la patte (22).

4. Pièce de fixation selon l'une quelconque des revendications précédentes, dans laquelle au moins une patte (22, 138) comprend en outre au moins une partie de retenue (24, 26, 140) pour maintenir l'écrou rapporté (30, 130) dans le corps (12, 112).

5. Pièce de fixation selon l'une quelconque des revendications précédentes, dans laquelle au moins une patte (122) a une partie épaissie formée par étampage (142).

6. Pièce de fixation selon l'une quelconque des revendications précédentes, dans laquelle la vis est pré-assemblée avec l'écrou rapporté (30, 130).

7. Pièce de fixation selon l'une quelconque des revendications précédentes, dans laquelle le corps (12, 112, 212) est fabriqué en acier à ressort.

8. Étagère ou armoire, en particulier étagère ou armoire de distribution, de câbles ou d'interrupteurs, comprenant au moins une pièce de fixation selon l'une quelconque des revendications précédentes.
